(19) Europäisches Patentamt
European Patent Office
Office européen des brevets

(11) EP 1 536 633 A1

(12) EUROPEAN PATENT APPLICATION

(43) Date of publication:
01.06.2005 Bulletin 2005/22

(51) Int Cl.⁷: H04N 5/232, H04N 5/262

(21) Application number: 04028026.5

(22) Date of filing: 25.11.2004

(84) Designated Contracting States:
AT BE BG CH CY CZ DE DK EE ES FI FR GB GR HU IE IS IT LI LU MC NL PL PT RO SE SI SK TR
Designated Extension States:
AL HR LT LV MK YU

(30) Priority: 27.11.2003 JP 2003398152

(71) Applicant: SONY CORPORATION
Tokyo (JP)

(72) Inventors:
• Miyamaki, Hideo, Sony Corporation
Shinagawa-ku Tokyo (JP)
• Tamura, Asako, Sony Corporation
Shinagawa-ku Tokyo (JP)

• Hibi, Hiroshi, Sony Corporation
Shinagawa-ku Tokyo (JP)
• Tabuchi, Satoshi, Sony Corporation
Shinagawa-ku Tokyo (JP)
• Suzuki, Masaharu, Sony Corporation
Shinagawa-ku Tokyo (JP)
• Koiwa, Yuichi, Sony Corporation
Shinagawa-ku Tokyo (JP)
• Sugitani, Hirofumi, Sony Corporation
Shinagawa-ku Tokyo (JP)

(74) Representative: Melzer, Wolfgang, Dipl.-Ing.
Patentanwälte
Mitscherlich & Partner,
Sonnenstrasse 33
80331 München (DE)

(54) **Photographing apparatus and method, supervising system, program and recording medium**

(57)     The motion of a moving subject is captured at a short time interval up to a wide area by tracking and photographing the moving subject. A wide angle area is photographed by a first camera, an area narrower than the wide angle area is photographed by a second camera, the presence or absence of the motion in an image is detected by a motion detecting section by comparing the first image with the second image in terms of the difference of luminance levels. The correlation of the positions of the first image and the second image is recorded by a memory, and the photographing direction of the second camera is controlled by a controller by using the correlation information when the presence of the motion is detected by the motion detecting section.

FIG. 1

**Description**

BACKGROUND OF THE INVENTION

1. Field of the Invention

The present invention relates to a photographing apparatus and method, a supervising system, a program and a recording medium which supervise a state of a wide range through a panoramic image obtained by photographing by sequentially altering a photographing direction.

This application claims priority of Japanese Patent Application No. 2003-398152, filed on November 27, 2003 and Japanese Patent Application No. 2004-266014, filed on September 13, 2004, the entireties of which are incorporated by reference herein.

2. Description of Related Art

An electronic still camera which has been, heretofore, widely used, converts a light passed through a lens by photographing a subject into an image signal through a solid state imaging element, such as a CCD (Charge Coupled Device) and the like, records the image signal in a recording medium and can reproduce the recorded image signal. Most of electronic still cameras each has a monitor which can display the photographed still image, and can selectively display the specific one of the still images recorded so far. In this electronic still camera, the image signal supplied to the monitor corresponds to the subject on each screen. Therefore, the simultaneously displayed images become a narrow range, and the electronic still camera cannot simultaneously supervise the state of a wide range.

Therefore, a supervisory camera which can supervise the states of a wide range by obtaining the whole panoramic image formed of a plurality of unit images by photographing a subject while sequentially shifting the photographing direction of the camera prevails. Particularly, in recent years, a technique for contracting and synthesizing a plurality of image signals to an image signal of one frame has been proposed (for example, refer to Patent Document No. 1 of Japanese Patent Application Laid-Open Publication No. 10-108163). Also, a centralized supervisory recording system which can realize a supervision by gathering supervisory images from a plurality of supervisory video cameras installed and recording the images in a recording medium, such as a video tape and the like has been proposed (for example, refer to Patent Document No. 2 of Japanese Patent Application Laid-Open Publication No. 2000-243062).

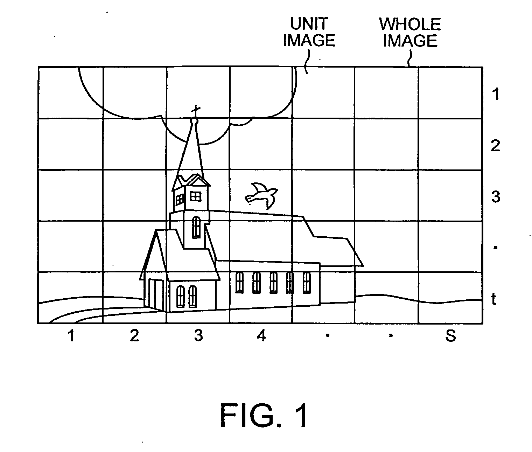

When a photographing range as shown in FIG. 1 is, for example, photographed at a predetermined photographing angle of view by a conventional supervisory camera, it is necessary to photograph a subject by sequentially shifting the photographing direction in a horizontal or vertical direction. If the size of the photographing range can be expressed by $(s \times t)$ times as large as the size of a frame (hereinafter referred to as a "unit image") obtained by photographing the size of the photographing range at the above-mentioned photographing angle of view, it is necessary to set at least $(s \times t)$ ways of the photographing directions.

Actually, the photographing direction of the supervisory camera is first matched to the coordinates (1, 1) disposed at an upper left side, and the photographing is executed. Then, the photographing direction of this supervisory camera is sequentially altered to the coordinates (2, 1), (3, 1), (4, 1),..., (s, 1) in the horizontal direction and the photographing is executed. After the photographing of a first row is finished, the photographing direction is regulated to the coordinates (1, 2) of a second row, and the photographing is executed. Thereafter, the photographing is executed while sequentially shifting the photographing direction in the horizontal direction. Such an operation is repeated, the photographing is executed to the coordinates (s, t). Thereafter, the unit images of the $(s \times t)$ pieces are laminated, and the whole image expressing the entire photographing range can be synthesized.

However, the supervisory camera as the conventional art needs to photograph all of the $(s \times t)$ pieces of the unit images constructing the whole image of one sheet to generate the whole image. Particularly, there is a problem that even small state change occurring in a short time in the photographing range cannot be captured without exception.

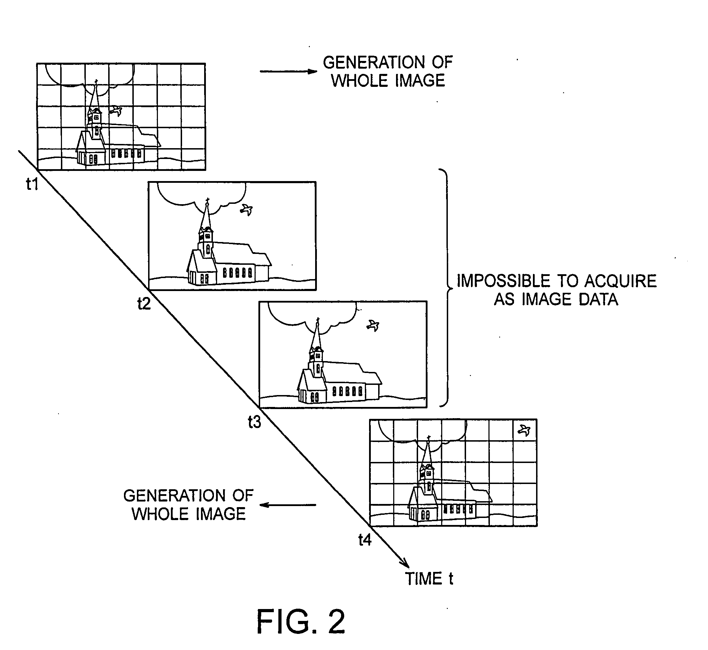

FIG. 2 shows the state that, as time is elapsed from time t1 to time t4, a moving subject (bird) having a fast moving speed gradually goes away from a building. When the unit images of the $(s \times t)$ pieces for constructing the whole image at the time t1 shown in FIG. 2 are photographed, since the moving subject including the unit images for constituting the building, clouds or the like in which the moving subject does not exist need to be sequentially photographed, a long time is required.

As a result, when the whole image is photographed at next timing, the time might already reach the time t4. Thus, the states of the moving subject at the times t2 and t3 cannot be captured as the image data, and hence there is a problem that a practical effect of supervising via the supervisory camera cannot be planned.

Further, if this moving subject is deviated from the photographing range, there also is a problem that photographing of the subject by capturing the subject at any time cannot be continued.

## SUMMARY OF THE INVENTION

Accordingly, the present invention has been made in view of the above-mentioned problems and has an object of providing photographing apparatus and method, supervising system, a program and a recording medium which can capture the motion of a moving subject at a short time interval up to a wide area by tracking and photographing the moving subject in the photographing apparatus and method, the supervising system, the program and the recording medium which photograph the respective unit images constructing the whole image expressing the entire photographing range to supervise the state of a wide photographing range.

In order to solve the above-mentioned problems, a wide angle area is photographed by a first camera, an area narrower than the wide angle area in a direction corresponding to the designated photographing direction is photographed by a second camera, the presence or absence of the motion in the image is detected by a motion detecting section by comparing a first image generated by the first camera with the previous image photographed previously from the first image in terms of the difference of a luminance level, correlation information showing the correlation of the positions of the first image and a second image obtained by the second camera is previously recorded by a memory, and the photographing direction of the second camera at the motion detected position by using the correlation information when the presence of the motion is detected by the motion detecting section is controlled by a controller.

That is, the photographing apparatus according to the present invention comprises: a first camera for photographing a wide angle area; a second camera for photographing an area narrower than the wide angle area in a direction corresponding to the designated photographing direction; a motion detecting section for detecting the presence or absence of a motion in the image by comparing a first image generated by the first camera with the previous image photographed previously from the first image in terms of the difference of a luminance level; a memory for previously recording correlation information showing the correlation of the positions of the first image and a second image obtained by the second camera, and a controller for controlling the photographing direction of the second camera at the motion detected position by using the correlation information when the presence of the motion is detected by the motion detecting section.

The photographing apparatus according to the present invention comprises: a first camera for photographing a wide angle area; a second camera for photographing an area narrower than the wide angle area in a direction corresponding to the designated photographing direction; a motion detecting section for detecting the presence or absence of a motion at each unit image by comparing a first unit image constructing a first wide angle image generated by the first camera with the unit image in the same photographing direction photographed previously from the first unit image in terms of the difference of a luminance level; a recording section previously recording correlation information showing correlation of the respective image positions between the first unit image and the second unit image obtained by the second camera; and a controller for controlling the photographing direction of the second camera at the motion detected position by using the correlation information when the presence of the motion is detected by the motion detection section.

The photographing method according to the invention comprises: a step of photographing a first image of a wide angle area by a first camera; a step of photographing a second image of an area narrower than the wide angle area by a second camera; and a motion detecting step of detecting the presence or absence of the motion in the image by comparing the first image with the previous image photographed previously from the first image in terms of a luminance level; controlling the photographing direction of the second camera at the motion detected position when the presence of the motion is detected by the motion detecting section by using the correlation information showing the correlation of the positions of the images of the first image and the second image obtained by the second camera.

The photographing method according to the present invention comprises: a step of photographing a first wide angle image of a wide angle area by a first camera; a step of photographing a second image of an area narrower than the wide angle area by a second camera; and a motion detecting step of detecting the presence or absence of the motion in the image at each unit image by comparing a first unit image constructing the first wide angle image with a unit image in the same photographing direction previously photographed from the unit image in terms of the difference of a luminance level; controlling the photographing direction of the second camera at the motion detected position when the presence of the motion is detected by the motion detecting section by using the correlation information showing the correlation of the positions of the images of the first unit image and a second unit image obtained by the second camera.

A supervising system according to the invention comprises: a first camera for photographing a wide angle area; a second camera for photographing an area narrower than the wide angle area in a direction corresponding to the designated photographing direction; a motion detecting section for detecting the presence or absence of a motion at each unit image by comparing a first unit image constructing a first wide angle image generated by the first camera with the unit image in the same photographing direction photographed previously from the first unit image in terms of the difference of a luminance level; a recording section previously recording correlation information showing correlation of the respective image positions between the first unit image and a second unit image obtained by the second camera; and a controller for controlling the photographing direction of the second camera at the motion detected position by using the correlation information when the presence of the motion is detected by the motion detecting section.

A program according to the present invention causes a computer to execute: a step of photographing a first image of a wide angle area by a first camera; a step of photographing a second image of an area narrower than the wide angle area by a second camera; and a motion detecting step of detecting the presence or absence of the motion in the image by comparing the first image with the previous image photographed previously from the first image in terms of a luminance level; controlling the photographing direction of the second camera at the motion detected position when the presence of the motion is detected by the motion detecting section by using the correlation information showing the correlation of the positions of the images of the first image and the second image obtained by the second camera.

BRIEF DESCRIPTION OF THE DRAWINGS

FIG. 1 is a view for explaining an example of a unit image constructing a whole panoramic image;

FIG. 2 is a view for explaining the problems of a conventional art;

FIG. 3 is a view showing a supervising system applied by the present invention;

FIG. 4 is a block diagram of cameras and a supervising unit;

FIG. 5 is a view for explaining a detailed structure of a whole image forming section;

FIG. 6 is a view for explaining the case that a photographing range shown by a rectangular frame is photographed by a camera unit at a photographing angle of view u;

FIG. 7 is a view showing the structural example of a display screen on a display;

FIG. 8 is a view showing a normal photographing mode and a tracking and photographing mode in a time series manner;

FIG. 9 is a view for explaining the normal photographing mode and the tracking and photographing mode in further detail;

FIG. 10 is a flowchart for explaining the sequence of obtaining a tracking photographing position by a tracking position calculating section;

FIG. 11 is a view for explaining setting of a supervising frame when a parking place is supervised;

FIG. 12 is a flowchart for explaining a photographing sequence by an entire photographing camera;

FIG. 13 is a flowchart for explaining an operating sequence of a difference sensing section;

FIG. 14 is a view for explaining the case that relative positions in a supervising area defined by points A to D of an image position E are identified;

FIG. 15 is a flowchart showing the photographing operation sequence of the tracking photographing section to which a tracking image position E' is notified;

FIG. 16 is a view for explaining an application example of a supervising system to which the present invention is applied;

FIG. 17 is a view showing another structure of a supervising system to which the present invention is applied;

FIG. 18 is a view showing still another structure of the supervising system to which the present invention is applied;

FIG. 19 is a view showing a structure of a supervising system in which a fixed camera is used for the entire photographing camera;

FIG. 20A is a front view showing a disposition example of the fixed camera and the tracking photographing camera in the above-mentioned supervising system, and FIG. 20B is a side view thereof;

FIG. 21 is a view showing an image of all directions of 360° acquired in real time by the fixed camera in the above-mentioned supervising system;

FIG. 22 is a view showing a panoramic image formed by laminating images obtained by the tracking photographing camera in the above-mentioned supervising system;

FIG. 23 is a view showing an image space in the above-mentioned supervising system;

FIG. 24 is a view showing four points A, B, C and D on the image of all directions of 360° initially set in the supervising unit in the above-mentioned supervising system;

FIG. 25 is a view showing four points A', B', C' and D' of the panoramic image initially set in the supervising unit in the above-mentioned supervising system;

FIG. 26 is a flowchart showing the operation of the supervising unit in the above-mentioned supervising system; and

FIG. 27 is a sectional view of a visual angle in a vertical direction of the entire photographing camera and the tracking photographing camera in the above-mentioned supervising system.

## DETAILED DESCRIPTION OF THE PREFERRED EMBODIMENTS

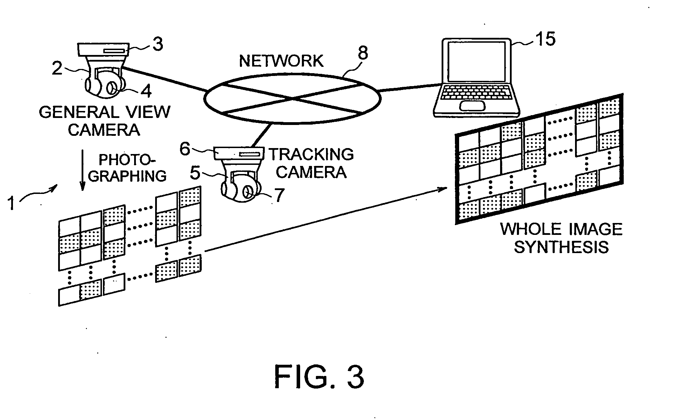

Now, preferred embodiment the present invention will be described in greater detail by referring to the accompanying drawings. The supervising system 1 to which the present invention is applied comprises: as shown, for example, in FIG. 3, an entire photographing camera 2 for generating an image signal by photographing a subject and a tracking and photographing camera 5, a network 8 connected to these cameras 2, 5, and a supervising unit 15 for controlling the entire photographing camera 2 and the tracking and photographing camera 5 through the connected network 8 or acquiring the image signals from the cameras 2 and 5.

The entire photographing camera 2 includes a pan tilter section 3 and a camera section 4 integrally constructed. The pan tilter section 3 is constructed as a rotating pedestal for freely altering the photographing direction at two axes of, for example, a pan and a tilt. The camera section 4 is arranged on the rotating pedestal constructing the pan tilter section 3 to photograph a subject while regulating the photographing direction in a horizontal or vertical direction under the control of the supervising unit 15. This camera section 4 sequentially alters the photographing angle of view in response to the control by the supervising unit 15, thereby enlarging or contracting a photographing magnification to photograph the subject.

This entire photographing camera 2 sequentially matches the photographing direction to the respective unit images constructing the panoramic image expressing the entire photographing range to execute the photographing, as shown in FIG. 3. Such unit images are transmitted as an image signal to the supervising unit 15 side through the network 8, and can thereby synthesize the whole image expressing the photographing range entirety by laminating the unit images.

The tracking and photographing camera 5 includes a pan tilter section 6, and a camera section 7 integrally constructed. Since the structures of the pan tilter section 6 and the camera section 7 are the same as the pan tilter section 3 and the camera section 4 in the entire photographing camera 2, the detailed description thereof will be omitted.

The supervising unit 15 is constructed of a personal computer (PC) and the like, and records the image signal transmitted from the entire photographing camera 2 through the network 8 in recording media, and displays the respective images based on the image signal recorded in the recording media for a user. The supervising unit 15 also judges the presence or absence of a motion by identifying a luminance component for the image signal transmitted from the entire photographing camera 2, and controls to switch a photographing mode in the entire photographing camera 2 in response to the judged result. Further, this supervising unit 15 serves as a so-called central control unit for controlling the network 8 entirety, and transmits an image and a voice in response to a request from another terminal unit (not shown).

The network 8 is a communication network which can transmit and receive information interactively, for example, like an internet network connected to the supervising unit 15 through a telephone channel, an ISDN (Integrated Services Digital Network)/B (broadband)- ISDN and the like connected to TA/modem. Incidentally, when this supervising system 1 is used in a predetermined narrow area, this network 8 may be constructed of a LAN (Local Area Network), or may be connected through an IEEE1394 interface and the like. Further, this network 8 may transmit even a moving image in addition to a still image. In such a case, a moving image, such as, for example, an MPEG (Moving Picture Experts Group) data is transmitted continuously from certain one channel based on an internet protocol (IP), and still image data is transmitted from another channel at regular time intervals. Note that, a network server (not shown) may be further connected to this network 8. This network server (not shown) manages, for example, internet information, receives request by a terminal unit, and transmits a predetermined information stored in itself.

Subsequently, the constructions of the entire photographing camera 2, the tracking and photographing camera 5, and the supervising unit 15 in the supervising system 1 to which the present invention is applied will be described in detail.

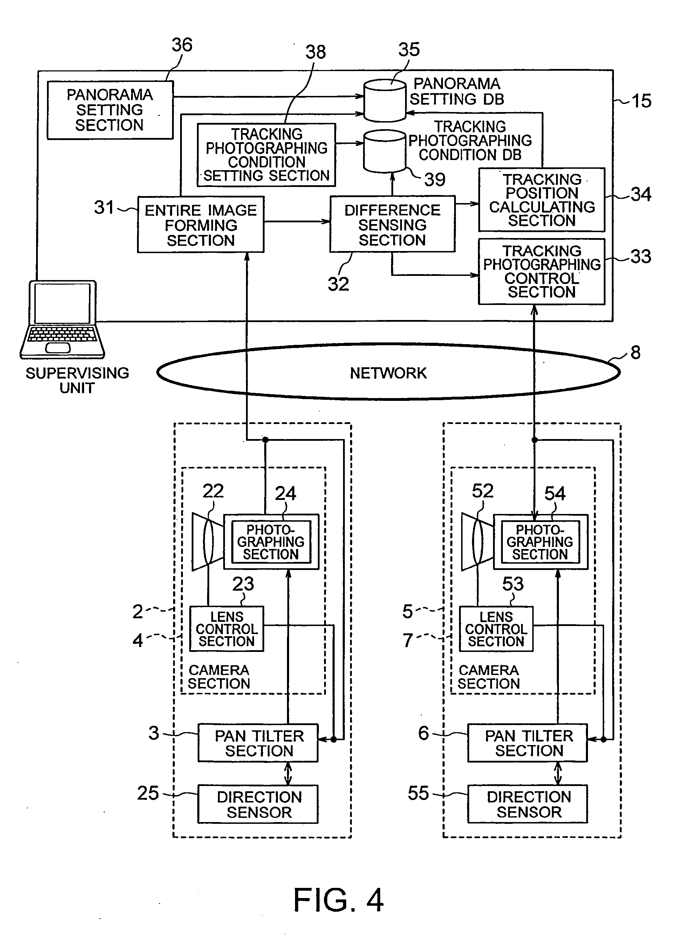

FIG. 4 is a structural view of the entire photographing camera 2, the tracking and photographing camera 5 and the supervising unit 15. In FIG. 4, the pan tilter section 3 constructing the entire photographing camera 2 includes a tilt section for controlling the rotating pedestal for altering the photographing direction and the pan section. The information regarding the position and the angle of the camera section 4 is transmitted by the connected azimuth sensor 25 to the pan tilter section 3. The camera section 4 constructing the entire photographing camera 2 includes a lens control section 23 for mainly altering the angle of view of the lens section 22, and an imaging section 24 arranged at a position perpendicular to the optical axis of the lens section 22.

Similarly, the pan tilter section 6 constructing the tracking and photographing camera 5 includes a tilt section for controlling the rotating pedestal for altering the photographing direction and a pan section. The information regarding the position and the angle of the camera section 52 is transmitted by the connected azimuth sensor 55 to this pan tilter section 6. The camera section 7 constructing the entire photographing camera 2 includes a lens control section 53 for mainly altering the angle of view of the lens section 52, and an imaging section 54 arranged at the position perpendicular to the optical axis of the lens section 52.

The supervising unit 15 includes a whole image forming section 31 for forming the whole panorama-like image (panoramic image) based on the image signal transmitted from the entire photographing camera 2 through the network 8, a difference sensing section 32 for detecting the motion of the whole image formed in the whole image forming section 31, a tracking and photographing control section 33 connected to the tracking and photographing camera 5 through the network 8 for controlling the tracking and photographing camera 5, a tracking position calculating section 34 for obtaining a tracking image position in response to the image position judged that the motion exists in the difference sensing section 32, a panorama setting database (DB) 35 connected to at least the whole image forming section 31 and the tracking position calculating section 34 for recording a correlation information showing a correlation at respective image positions among unit images obtained from the entire photographing camera 2 and the tracking and photographing camera 5, a correlation information forming section 36 for forming the above-mentioned correlation information, a tracking and photographing conditions setting section 38 for setting conditions for tracking and photographing (hereinafter, referred to as "tracking and photographing conditions"), and a tracking and photographing conditions DB 39 for recording the tracking and photographing conditions set in the above-mentioned tracking and photographing conditions setting section 38.

The pan tilter section 3 rotates a stepping motor constructed as a drive source of the rotating pedestal based on a drive signal from the whole image forming section 31. Since the rotating pedestal itself can be turned in a horizontal direction or a vertical direction in this manner, the photographing direction of the camera section 4 placed on the rotating pedestal can be turned in the horizontal direction or the vertical direction.

The lens control section 23 executes an automatic diaphragm control operation and an automatic focusing control operation for the lens section 22 based on the drive signal from the whole image forming section 31. This lens control section 23 alters the photographing angle of view to the subject based on such a drive signal. Thus, the camera section 4 sequentially regulates a photographing magnification to thereby photographing the subject.

The imaging section 24 includes a solid state imaging element, such as, a CCD (Charge Coupled Device) and the like, focuses a subject image incident through the lens section 22 on an imaging surface, and generates an image signal by a photoelectric conversion. The imaging section 24 transmits the generated image signal to the whole image forming section 31.

The pan tilter section 6 rotates a stepping motor constructed as a drive source of the rotating pedestal based on the drive signal from the tracking and photographing control section 33. Thus, the photographing direction of the camera section 7 placed on the rotating pedestal can be turned in the horizontal direction or the vertical direction.

The lens control section 53 executes an automatic diaphragm control operation and an automatic focusing control operation for the lens section 52 based on the drive signal from the tracking and photographing control section 33. This lens control section 53 alters the photographing angle of view to the subject based on such a drive signal. Thus, the camera section 4 sequentially regulates a photographing magnification to thereby photographing the subject.

The imaging section 54 includes, for example, a solid state imaging element, such as, a CCD (Charge Coupled Device) and the like, focuses a subject image incident through the lens section 52 on an imaging surface, and generates an image signal by a photoelectric conversion. The imaging section 54 transmits the generated image signal to the tracking and photographing control section 33.

The whole image forming section 31 executes predetermined control through the network 8 so that the photographing direction can be gradually altered at the imaging time by the entire photographing camera 2 to realize photographing of a wide range. This whole image forming section 31 creates the whole panorama-like image of one sheet by laminating the unit images photographed by the entire photographing camera 2. The whole image forming section 31 records the formed whole image, and reads the image in response to the request of the difference sensing section 32.

The difference sensing section 32 detects the motion of the whole image formed in the whole image forming section 31. The difference sensing section 32 notifies the detected result of the motion to the tracking position calculating section 34 and the tracking and photographing control section 33. Incidentally, the difference sensing section 32 may inquire this motion detecting conditions to the tracking and photographing conditions DB 39.

The tracking and photographing control section 33 controls the photographing direction, the photographing angle of view and the like of the tracking and photographing camera 5 through the network 8 based on the motion detected result and the like notified from the difference sensing section 32. The tracking and photographing control section 33 acquires the unit image photographed by the tracking and photographing camera 5 through the network 8.

The panorama setting section 36 includes a keyboard, a mouse and the like for a user to input desired information to form the above-mentioned correlation information.

The tracking and photographing conditions setting section 38 includes a keyboard, a mouse and the like for setting the conditions of the motion detection to be stored in the tracking and photographing conditions DB 39.

Next, the detailed structure of the whole image forming section 31 will be described.

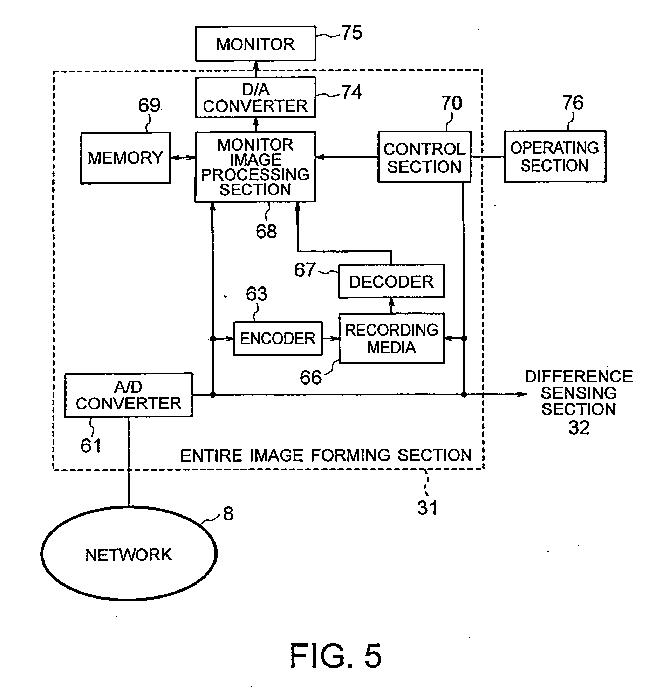

The whole image forming section 31 includes, as shown in FIG. 5, an A/D conversion section 61 connected to the entire photographing camera 2 through the network 8, an encoder 63 connected to this A/D conversion section 61, a recording media 66 for storing the image outputted from the encoder 63, a decoder 67 for expanding the image read from the recording media 66, a monitor image processing section 68 connected to the A/D conversion section 61 and the decoder 67 for forming the image to be displayed for a user, a memory 69 for temporarily storing the image supplied from the connected monitor image processing section 68, a D/A conversion section 74 for converting the signal inputted from the connected monitor image processing section 68 into an analog signal, and a control section 70 for controlling respective constituting elements.

Incidentally, a monitor 75 including a liquid crystal display screen and the like and displaying predetermined information for a user is connected to the D/A conversion section 74. An operating section 76 for designating a desired image area and an image position by a user from the image displayed on the monitor 75 is connected to the control section 70.

The A/D conversion section 61 digitizes the image signal transmitted from the entire photographing camera 2, and transmits the digitized image signal to the encoder 63, the difference sensing section 32, and the monitor image processing section 68.

The encoder 63 performs compression and coding based on the standards, such as, JPEG (Joint Photographic Experts Group) and the like. Incidentally, this encoder 63 may add position information or meta data to the image signal to be compressed and coded. The encoder 63 outputs the compressed and coded image signal to the recording media 66. Incidentally, when the supplied image signal is not subjected to compressing and coding, the process in the encoder 63 is omitted.

The recording media 66 is applied, for example, as a hard disc, a detachable disc-like recording medium and the like, the image signal outputted from the encoder 63 is sequentially recorded in association with position information or meta data. The image signal recorded in the recording media 66 is read based on the control by the control section 70 and is transmitted to the decoder 67. Incidentally, the image signal recorded in a memory card can be transferred to the other PC by controlling to record the image signal recorded in the recording media 66 into a memory card (not shown). The recording media 66 can be replaced with a network server (not shown) by controlling to record the image signal recorded in the recording media 66 into the above-mentioned network server (not shown).

The decoder 67 expands the image signal of the JPEG format read from the recording media 66, and transmits the image signal to the monitor image processing section 68.

The monitor image processing section 68 executes picture processing to the monitor 75 based on the image signal transmitted from the A/D conversion section 61 or the decoder 67 under the control of the control section 70. The monitor image processing section 68 executes the control of a contrast, a luminance in the monitor 75 based on the control by the control section 70. This monitor image processing section 68 executes thinning process of pixels for displaying a plurality of images on a liquid crystal display screen in the monitor 75 simultaneously by cooperating with the memory 69.

The control section 70 transmits a drive signal for driving the pan tilter section 3 and the lens control section 23, and a control signal for controlling the respective units in the supervising unit 15 when the image area and the image position are designated by a user through the operating section 76. This control section 70 receives a request from other terminal unit through the network 8, selects optimum still image, moving image or various information recorded in the recording media 66, and controls to transmit the image or the information to the terminal unit.

The monitor 75 includes, for example, a liquid crystal display element, a back light and the like (not shown), and is an interface for visually recognizing the image photographed by the user. The liquid crystal display element is irradiated with an illumination light by the above-mentioned back light from the back surface of the liquid crystal display element, and the visibility of the monitor 75 can be entirety improved.

The operating section 76 includes a keyboard, a mouse and the like for a user to designate a desired image area and an image position from the image displayed on the monitor 75. Incidentally, the operating section 76 may take the structures of the panorama setting section 36 and/or the tracking and photographing conditions setting section 38, as a result, the section 36 and/or section 37 may be, as a matter of course, omitted.

Then, the operation until the whole image is formed by this whole image forming section 31 will be described.

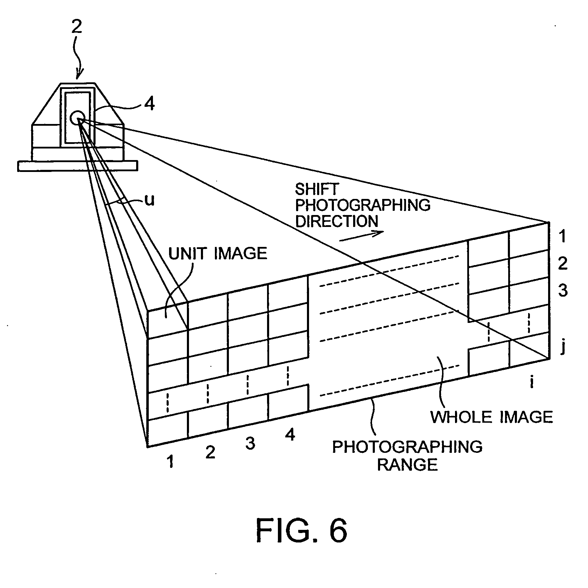

FIG. 6 shows the case that a photographing range shown by a rectangular frame is photographed by a photographing angle of view u by the entire photographing camera 2. To photograph all the photographing range by the photographing angle of view u, it is necessary to sequentially shift the photographing direction in a horizontal direction or a vertical direction. If the size of the photographing range is expressed by $(i \times j)$ times as large as the sizes of the frame (hereinafter referred to as a "unit image") obtained by photographing the size of the photographing range at an arbitrary photographing angle of view u, it is necessary to set the photographing directions of at least the $(i \times j)$ ways. The whole image expressing the entire photographing range can be synthesized by laminating the $(i \times j)$ pieces of the unit images photographed at this photographing angle of view u.

Here, when the coordinates (M, N) of the respective unit images of the photographing range are sequentially indicated from a left end in the horizontal direction by 1, 2,..., M,.., i, and from an upper end in the vertical direction by 1, 2,.., N,.., j, the control section 70 transmits a predetermined drive signal to the pan tilter section 3. Thereby, the photographing direction of the camera section 4 is first matched to the coordinates (1, 1) disposed at an upper left side, and the camera section 4 executes imaging. The image signal based on the unit images generated by imaging this coordinates (1, 1) is A/D converted by the A/D conversion section 61, and then stored in the memory 69 through the monitor image processing section 68. The image signal is compression coded based on the JPEG standards in the encoder 62, meta data and the like are simultaneously added, and sequentially recorded in the recording media 66.

Similarly, the control section 70 transmits the drive signal to the pan tilter section 3, thereby shifts the photographing direction of the camera section 4 to a right side by one image frame, and executes photographing by matching to the coordinates (2, 1). The image signal generated by photographing this coordinates (2, 1) is similarly recorded in the recording media 66. The camera section 4 sequentially alters the photographing direction to the coordinates (3,1), (4, 1),.., (i, 1) in the horizontal direction based on the control by the control section 70, and executes photographing.

After the camera section 4 finishes the photographing of a first row, the camera section 4 executes photographing by regulating the photographing direction to the coordinates (1, 2) of a second row, thereafter executes photographing while sequentially shifting the photographing direction in the horizontal direction based on the control by the control section 70. When such an operation is repeated and the photographing is finished to the coordinates (i, j), the memory 69 and the recording media 66 become the state that the image signals based on the (i $\times$ j) pieces of the unit images photographed at the respective coordinates are recorded. Incidentally, after the photographing to the coordinates (i, j) is finished, the control section 70 transmits the drive signal to the pan tilter section 3, and thereby executes the photographing at next timing by matching the photographing direction of the camera section 4 to the coordinates (1, 1) disposed again at the upper left side.

It should be noted that the sequence of photographing the unit images is not limited to the above-mentioned example. For example, after the photographing of the first row is finished, the photographing direction is regulated to the coordinates (i, 2) of a second row based on the control by the control section 70, the photographing is executed, and, thereafter, the photographing direction may be shifted toward the coordinates (1, 2).

The image signals based on the respective unit images recorded in the memory 69 are sequentially read by the monitor image processing section 68, and reduced to be matched to the size of the display screen in the monitor 75. This reduced respective unit images are displayed on the monitor 75 through the D/A conversion section 74. All the unit images of the (i $\times$ j) pieces recorded in the memory 69 are displayed on the monitor 75, and thereby one panorama-like image is synthesized. The above-mentioned photographing operation is executed at a predetermined interval, and thereby the whole image showing the latest state of the photographing range can be acquired.

Further, when the unit images recorded in the recording media 66 before are to be displayed on the monitor 75 is designated by the control section 70, the image signals based on the unit images from the recording media 66 are sequentially read, enlarged by the decoder 67, and transmitted to the monitor image processing section 68. The image signal is reduced to be matched to the size of the display screen as described above in the monitor image processing section 68, synthesized to the whole panorama-like image, and displayed.

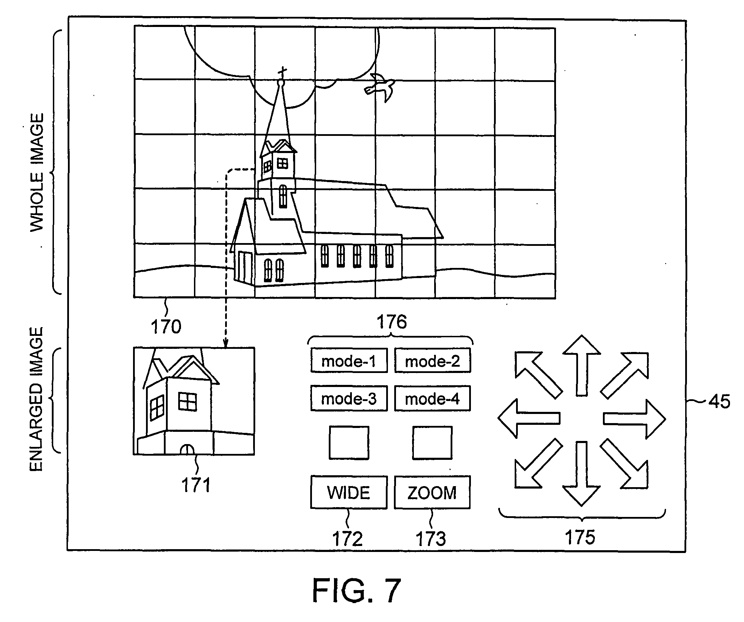

FIG. 7 shows an example of displaying the whole image synthesized by laminating the photographed unit images of the (i $\times$ j) pieces on the entire image display section 170 of the monitor 75. Incidentally, this supervising unit 15 may display a boundary between the respective unit images for constructing the whole image on the entire image display section 170, or may display only a seamless entire image. The supervising unit 15 may cause to display the whole image of one sheet photographed at the photographing angle of view, the entire photographing range of which can be captured instead of the whole panorama-like image on this entire image display section 170.

Incidentally, an enlarged image display section 171 for displaying the enlarged image obtained by enlarging the unit image is further provided in the display screen 45. This enlarged image display section 171 may enlarge and display one unit image designated by the user of the unit images constructing the whole image displayed on the whole image display section 170. Or, moving images may be sequentially displayed with respect to the photographing direction of such a unit image. Thus, the user can confirm the state of the photographing direction of the designated unit image in real time.

On the display screen 45, a WIDE button 172 for displaying the unit image displayed on the enlarged image display section 171 by reducing the photographing magnification, and a ZOOM button 173 for enlarging the photographing magnification and displaying the image are displayed. On this display screen 45, a photographing direction control section 175 for regulating the photographing direction of the camera section 4 in horizontal direction and vertical direction, and a set button 176 or the like for recording the image signal based on the unit image on a desired address in case of setting various modes or a server, is displayed.

The user can designate a desired image area, an image position to the entire image display section 170 and the enlarged image display section 171 through the operating section 176. It should be noted that an aiming line or a pointer for executing the above-mentioned designating operation may further be displayed by cooperating with the motion of a mouse or the like in the operating section 176 on the respective display sections 170, 171.

In the supervising system 1 to which the present invention is applied, in addition to the normal photographing mode for synthesizing the whole image displaying the whole photographing range by laminating the unit images of (i $\times$ j) pieces photographed by the entire photographing camera 2 as described above, a tracking and photographing mode for capturing the desired moving subject and continuously photographing the moving subject at any time by the tracking and photographing camera 5 is incorporated. In this tracking and photographing mode, the whole image is generated at a short time interval. Thus, the motion of the moving subject such as a bird displayed on the entire image display section 170 in FIG. 7 is captured as an image signal without leakage.

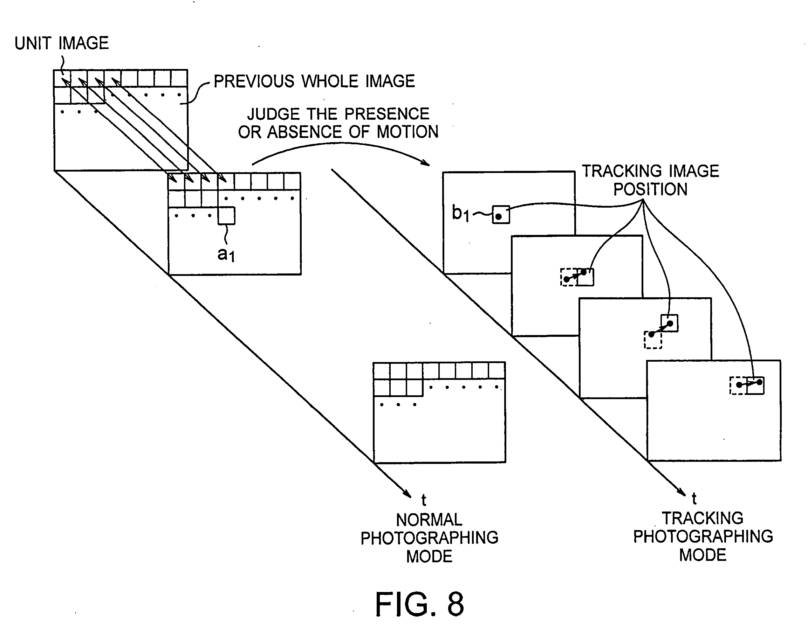

FIG. 8 shows a normal photographing mode and a tracking and photographing mode in time series. Since the photographing direction is sequentially matched to all the unit images for constructing the whole image and photographing is executed in the normal photographing mode, it takes a long time until one whole image is synthesized. As a result, the number of the whole images which can be generated at a unit time (hereinafter referred to as a "refresh rate") is reduced.

On the other hand, in the tracking and photographing mode, since it is sufficient to photograph only one or more unit images including the tracking image position by capturing the moving subject, the photographing can be finished in a short time as compared with the normal photographing mode, and the refresh rate can be raised.

In the supervising system 1 to which the present invention is applied, when the photographing operation of the subject is started, photographing by the normal photographing mode is first executed. In this case, the difference sensing section 32 judges, as shown in FIG. 8, the presence or absence of the motion between the photographed unit image and the unit images in the same photographing direction constructing the previous whole image. As a result, if the unit image judged that there is the motion is exist by the difference sensing section 32, the fact is notified to the tracking position calculating section 34 and the tracking photographing control section 33 as the suggestion of the presence of the moving subject, and the tracking and photographing mode is initiated.

Incidentally, in this tracking and photographing mode, the tracking image position in the unit image al judged that there is a motion by the difference sensing section 32, a unit image b1 is generated by tracking photographing by the tracking and photographing camera 5. In such a case, since there is the case that an installing environment, a photographing direction and the like are different from each other between the entire photographing camera 2 and the tracking and photographing camera 5, and, therefore, the photographing directions between the cameras 2 and 5 are matched by referring to the correlation information recorded in the panorama setting DB 35 in the tracking position calculating section 34. In fact, this tracking position calculating section 34 matches the photographing directions between the cameras 2 and 5 through the calculated tracking image positions. Thus, the tracking and photographing camera 5 is scanned by the pan tilting in the photographing direction designated from the tracking position calculating section 34 through the tracking photographing control section 33. Thereby, the acquired unit image 1b can be matched to the unit image al. The detailed procedure for matching the photographing directions of the cameras 2 and 5 through the tracking image positions will be described later.

Incidentally, the difference sensing section 32 may use not only the whole image photographed at the previous timing as the previous whole image to be compared with newly photographed unit image with respect to a luminance level, but also the whole image stored in advance. In such a case, the use of any whole image is previously set under any conditions by the tracking and photographing condition setting section 39, and this may be recorded in the tracking and photographing condition DB.

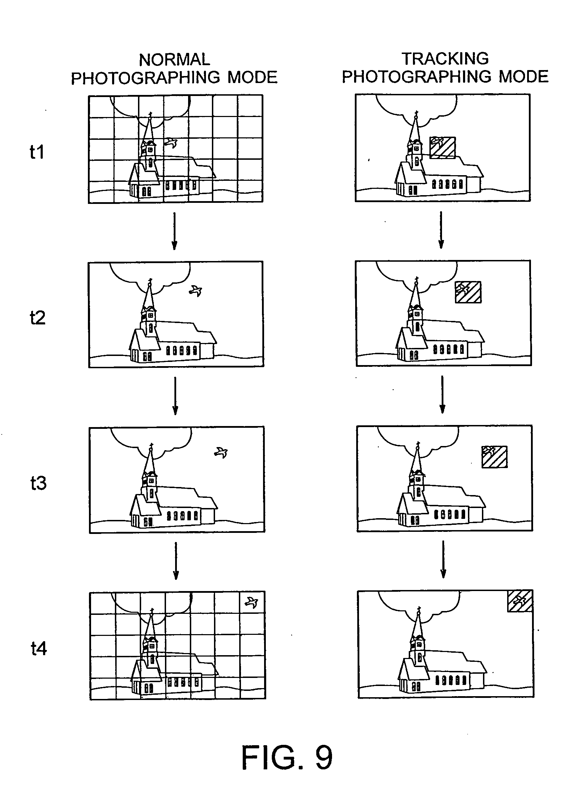

When the tracking and photographing mode is started, photographing is executed by two cameras in parallel with the normal photographing mode. For example, as shown in FIG. 9, as time is elapsed from time t1 to t4, in the case that the moving subject (bird) having a fast moving speed is gradually separated from a building, since it is necessary to sequentially photograph including the unit images for constructing the building, clouds and the like where the moving subject does not exist, it requires a long time, in the normal photographing mode, when the unit images of (s × t) pieces constructing the whole image is photographed at the time t1.

As a result, in this normal photographing mode, there might be the case that the time already reaches t4 when the whole image is photographed at next timing, and, therefore, the state of the moving subject at times t2, t3 cannot be captured as image data.

On the contrary, in the tracking and photographing mode, since only the unit images including the moving subject may be sequentially photographed, the state of the moving subject at the times t2, t3 are sequentially imaged, and can be stored. Even when this moving subject is deviated from the photographing range, this subject can be captured at any time by the tracking and photographing camera 5, and can be continuously photographed. As a result, in the tracking and photographing mode, as shown in FIG. 9, the unit images photographed only in the area in the frame at the times t1 to t4 can be obtained, and the slight state change occurring for a short time can be captured without exception.

Then, the procedure for obtaining the tracking image position by the tracking position calculating section 34 will be further described in detail.

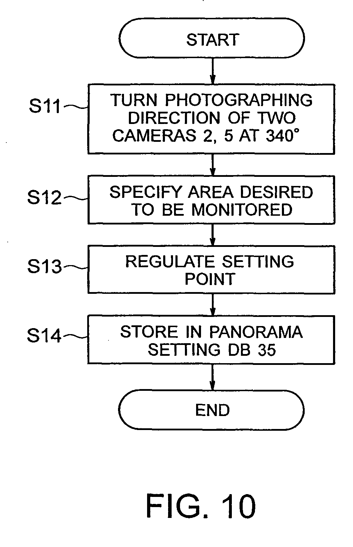

First, in step S11 shown in FIG. 10, the unit image is photographed by the entire photographing camera 2 and the tracking and photographing camera 5 while the photographing direction is turning at 340° in a tilt direction. The unit images photographed by the respective cameras 2 and 5 are transmitted to the whole image forming section 31, and are recorded in the recording media 66. It is noted that the turning angle is not limited to 340°, but may be any angle.

Then, the operation is transferred to step S 12, the unit images photographed by turning the cameras 2 and 5 at 340° in step S11 are laminated to form the whole image. The formed respective whole images are displayed on the monitor 75.

Then, the operation is transferred to step S13, a user specifies a desired area to be supervised from the whole image displayed on the monitor 75 in step S12. In such a case, the user designates the area desired to be supervised by the operating section 76 from the whole image displayed on the monitor 75.

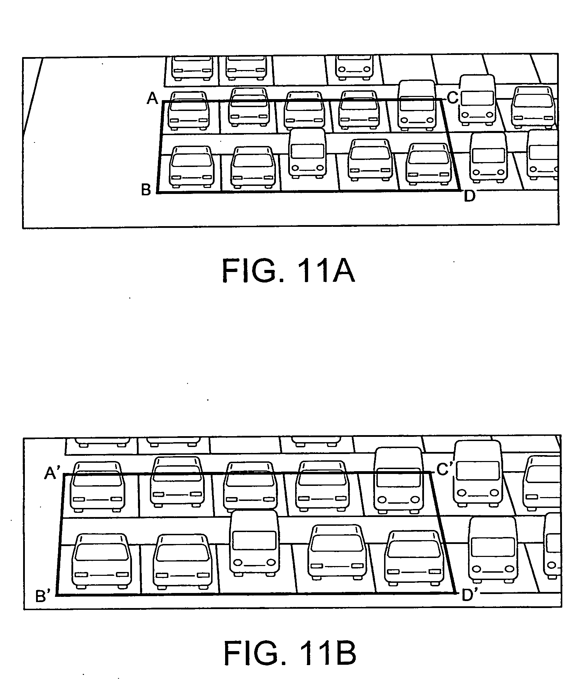

FIG. 11A shows the part of the whole image from the unit image photographed by the entire photographing camera 2 when a parking lot is supervised. FIG. 11B shows the part of whole image photographed by the tracking and photographing camera 5 installed at a different position. In step S12, the user sets the area desired to be supervised for the whole image shown in FIG. 11A, for example, in a frame for connecting points A to D (hereinafter referred to as a supervising "frame"). This supervising frame becomes the above-mentioned photographing range. Similarly, in this step S12, the user sets points A' to D' so that the objects to be photographed correspond to the above-mentioned A to D for the whole image shown in FIG. 11B. These sets are called supervising frame sets.

Incidentally, the supervising frame set of the points A to D and the points A' to D' may be set manually via the operating section 76. Alternatively, it may be automatically performed based on, for example, luminance information and the like.

Then, the operation is transferred to step S13, the points A to D set at the supervising frame in step S12 and the points A' to D' are finely regulated to show the same image position. In such a case, the names, the coordinates, setting names and the like of the respective set points are finely regulated to coincide between the points A to D and A' to D'. This fine regulations may be corresponded between the points A to D and the points A' to D'. Thus, not only the set points A to D and the points A' to D', but also between the image positions in the supervising frame, can be corresponded to each other. Since the image positions are corresponded to each other, a relative movement in the other image position can be identified in response to the movement of one image position.

Then, the operation is transferred to step S14, and all the supervising frame sets are stored in the panorama setting DB35. That is, in this step S14, the correspondence between the set points A to D and the set points A' to D' is stored in the panorama setting DB 35 as the above-mentioned correlation information.

Incidentally, the entire photographing camera 2 and the tracking and photographing camera 5 are superposed on each other, and are arranged on substantially the same position, and, therefore, processes in the above-mentioned steps S11 to S14 can be processed.

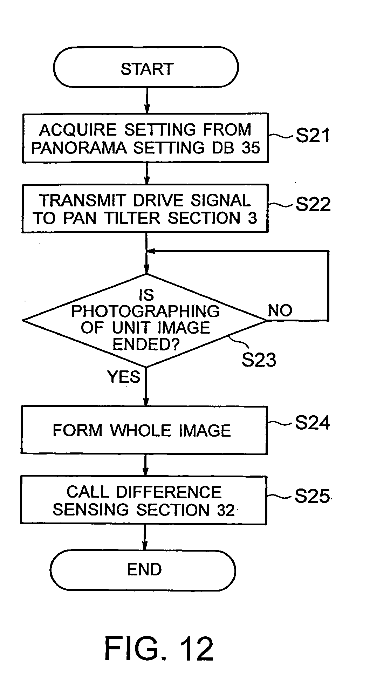

According to the present invention, the processes to the above-mentioned steps S11 to S14 are executed before the actual supervising. In the actual photographing, the operation is executed based on the procedure shown in FIG. 12.

First, in step S21, the whole image forming section 31 reads the supervising frame set recorded in the panorama setting DB35, and identifies the photographing range.

Then, the operation is transferred to step S22. This whole image forming section 31 generates a drive signal for controlling the pan tilter section 3 based on the identified photographing range. This drive signal is transmitted to the pan tilter section 3, and thereby sequentially shifting the photographing range in the horizontal direction or the vertical direction in the identified photographing range to perform photographing.

Then, the operation is transferred to step S23, whether the photographing of all the unit images in the photographing range (supervising frame) is finished or not is judged. As a result, all the unit images are not yet finished to be photographed is judged, the photographing is continued, while if the finish is judged, the operation is transferred to step S24.

If the operation is transferred to step S24, the unit images are laminated to form the whole image. Then, the generated whole image is reformed, and may be displayed on the monitor 75.

Then, the operation is transferred to step S25, and the whole image forming section 31 notifies the effect of generating new whole image to the difference sensing section 32.

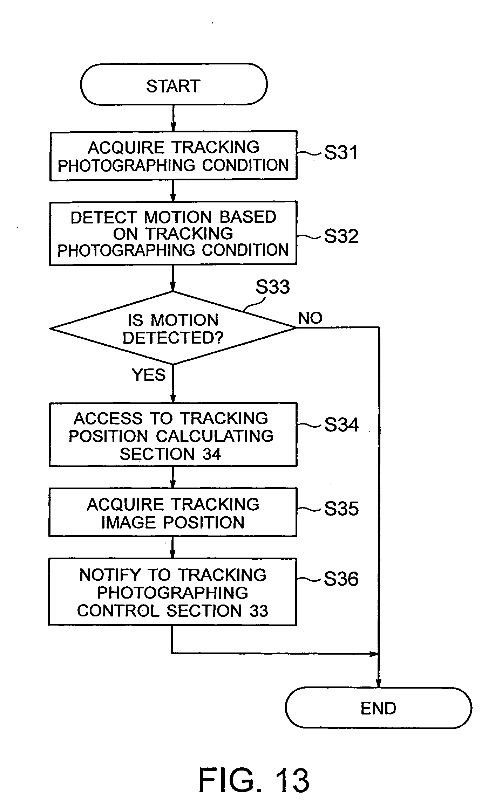

FIG. 13 shows the operating sequence of the difference sensing section 32 which receives such a notification.

First, in step S31, the difference sensing section 32 accesses to the tracking and photographing condition DB39, and thereby acquiring the tracking and photographing condition recorded in the tracking and photographing condition DB39.

Then, the operation is transferred to step S32, the difference sensing section 32 detects the motion based on the acquired tracking and photographing condition. The motion detection in this step S32 is executed by obtaining a differential value of the luminance levels between the newly generated whole image and the previously acquired whole image. In such a case, whether the differential value of the obtained luminance levels exceeds a preset threshold value or not is judged (Step S33). Here, when the differential value of the luminance levels exceeds a threshold value, the detection of the motion is judged, and the operation is transferred to step S34. On the other hand, when the differential value of the luminance levels is the threshold value or less, it is judged that the motion is not detected, and the process is finished. In such a case, the difference sensing section 32 acquires the above-mentioned threshold value from the tracking and photographing condition DB39 as the above-mentioned tracking and photographing condition. The accuracy of the motion detection is controlled according to how this threshold value is set. Therefore, this threshold value can be freely set through the tracking and photographing conditions setting section 38, and thereby the level and the accuracy of the motion detection may be freely regulated.

Then, the operation is transferred to step S34, the difference sensing section 32 accesses to the tracking position calculating section 34, and informs the image position E of the motion detection, that is, the coordinates (Ex, Ey) of the image area exceeding the threshold value by the differential value of the luminance level, to the tracking position calculating section 34. Then, the operation is transferred to step S35, and the difference sensing section 32 acquires the tracking image position calculated by the tracking position calculating section 34. Further, this difference sensing section 32 notifies the acquired tracking image position in step S36 to the tracking photographing control section 33.

Here, a method for calculating the tracking image position in step S35 will be explained in the above-mentioned steps S11 to S 14 with reference to the case that the supervising frame of the parking lot is set as an example.

First, the tracking position calculating section 34 reads the supervising frame set at the points A to D and the points A' to D' recorded in the panorama setting DB35. The coordinates of a point A read here is (Ax, Ay), the coordinates of a point B is (Bx, By), the coordinates of a point C is (Cx, Cy), and the coordinates of a point D is (Dx, Dy).

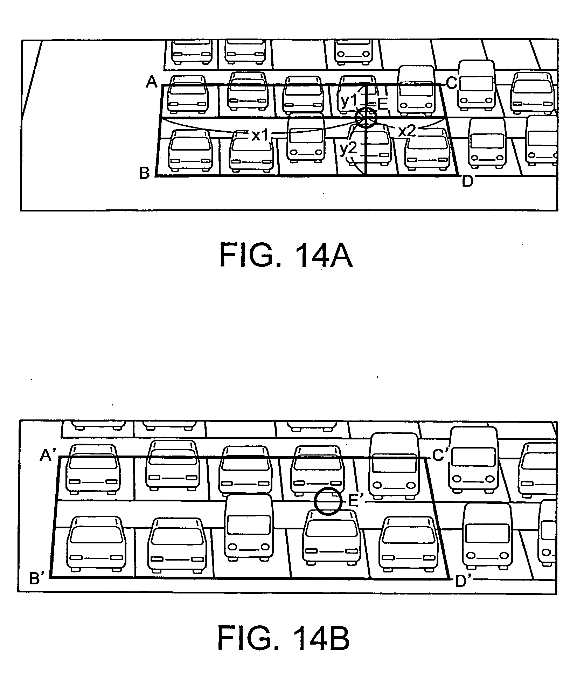

The tracking position calculating section 34 identifies a relative position in the supervising area defined by the points A to D of the image position E notified from the difference sensing section 32 in the above-mentioned step S34. In such a case, the relative position of the image position E may be expressed by a ratio (x1: x2) of a longitudinal direction and a ratio (y1:y2) of a lateral direction, as shown in FIG. 14A. In such a case, the ratio of the longitudinal direction and the ratio of the lateral direction can be expressed by formula 1 and formula 2 as below:

$$x1 : x2 \fallingdotseq Ex \times (Ax + Bx)/2: Ex \times (Dx + Cx)/2 \qquad \text{(formula 1)}$$

$$y1 : y2 \fallingdotseq Ey \times (Ay + Cy)/2 : Ey \times (By + Dy)/2 \qquad \text{(formula 2)}$$

Thus, the relative position of the motion detected image position E can be obtained in the whole image photographed by the entire photographing camera 2.

Then, this tracking position calculating section 34 calculates what coordinates of the whole image corresponds to this image position E in the tracking and photographing camera 5. Here, as shown in FIG. 14B, the coordinates of the acquired point A' is (A'x, A'y), the coordinates of the acquired point B' is (B'x, B'y), the coordinates of the point C' is (C'x, C'y), and the coordinates of the point D' is (D'x, D'y). In the whole image of the tracking and photographing camera 5, the tracking image position corresponding to the above-mentioned image position E will be hereinafter the tracking image position E', and the coordinates will be (E'x, E'y).

In such a case, in the case of A'x ≧ B'x and D'x ≧ C'x, E'x can be expressed by the following formula 3:

$$E'x \fallingdotseq ((C'x + (D'x\text{-}C'x) \times y1/(y1+y2)) - ((B'x + (A'x\text{-}B'x) \times y2/(y1+y2) \times$$

$$x1/(x1+x2)) + B'x + (A'x\text{-}B'x) \times y2/(y1+y2) \qquad \text{(formula 3)}$$

In the case of D'y ≧ B'y and A'y ≧ C'y, E'y can be expressed by the following formula 4:

$$E'y \fallingdotseq ((B'y + (D'y\text{-}B'y) \times x1/(x1+x2)) - ((C'y + (A'y\text{-}C'y) \times x2/(x1+x2) \times$$

$$y1/(y1+y2) + C'y + (A'y\text{-}C'y) \times x2/(x1+x2) \qquad \text{(formula 4)}$$

That is, the coordinates (E'x, E'y) of this obtained tracking image position E' corresponds to the coordinates (Ex,Ey) of the coordinates position E. Even if the entire photographing camera 2 and the tracking and photographing camera 5 are installed at different positions or are installed at different distance from a parking lot from each other, the coordinate position E' in the tracking and photographing camera 5 can be uniquely obtained from the coordinate position E motion detected from the entire image in the entire photographing camera 2.

The tracking position calculating section 34 can transmit the coordinates (E'x, E'y) of the obtained tracking image position E' as the tracking image position to the difference sensing section 32. The difference sensing section 32 transmits the coordinates (E'x, E'y) of the tracking image position E' to the tracking photographing control section 33. The tracking photographing control section 33 is set to include the coordinates (E'x, E'y) in the photographing direction of the tracking and photographing camera 5, and can match the photographing direction to the motion detected image position.

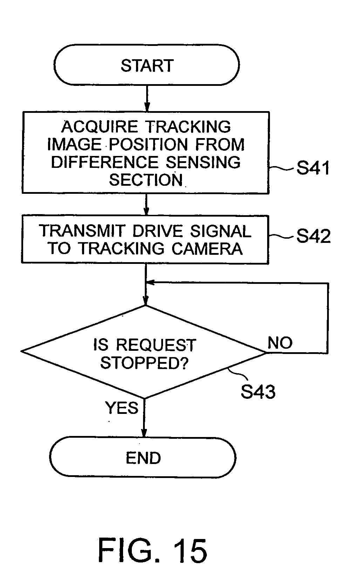

FIG. 15 shows the photographing operation sequence of the tracking photographing control section 33 to which such a tracking image position E' is notified.

First, in step S41, the tracking photographing control section 33 acquiring the tracking image position from the difference sensing section resets the photographing direction of the tracking and photographing camera 5 to include the coordinates (E'x, E'y). Then, the operation is transferred to step S42, a drive signal is transmitted to the tracking and photographing camera 5, and the photographing is started in the photographing direction.

The tracking and photographing camera 5 checks whether the signal for stopping the photographing is transmitted from the tracking and photographing control section 33 or not one by one. If the signal is transmitted, the photographing operation is stopped.

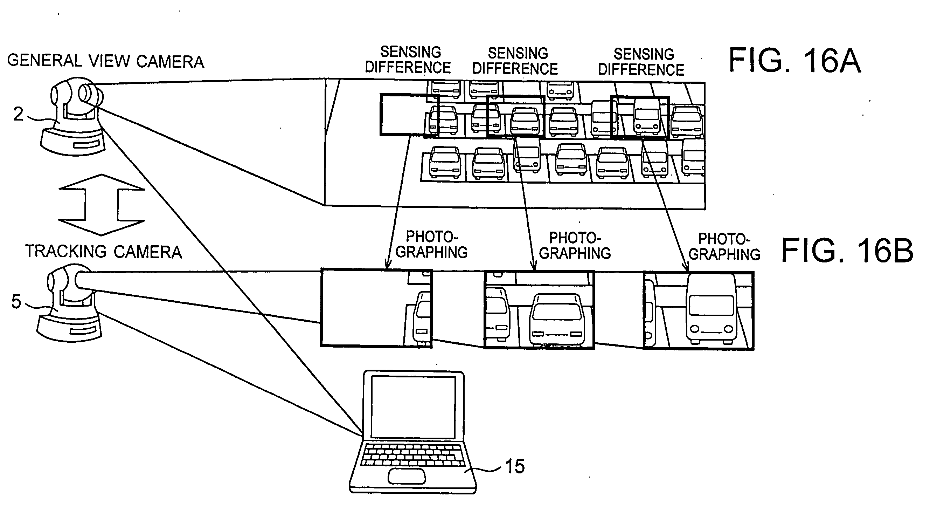

Such a supervising system 1 sets the supervising frame in no admittance area by the entire photographing camera 2 as shown, for example, in FIG. 16A as an application of particularly in supervising a parking lot. If a difference occurs at an illumination level from the previous entire image due to entrance of a person into this area, the photographing direction is matched to include the tracking image position by the tracking and photographing camera 5 as shown in FIG. 16B, and the tracking photographing is executed.

Such a supervising system 1 can be installed in a projection room of a multiplex movie theater so called a cinema complex. The entire image of the so called an empty state before audience sit is obtained, and the supervising frame is set to include the respective seats. Thus, a difference of the luminance level of the audience sitting on the seats occurs. As a result that the obtained difference value exceeds the threshold value, the photographing direction is matched to include the tracking image position, and the tracking photographing can be executed. Thus, when a person sits the reserved seat by comparing the selling information of tickets and reservation information of the seats, this can be traced.

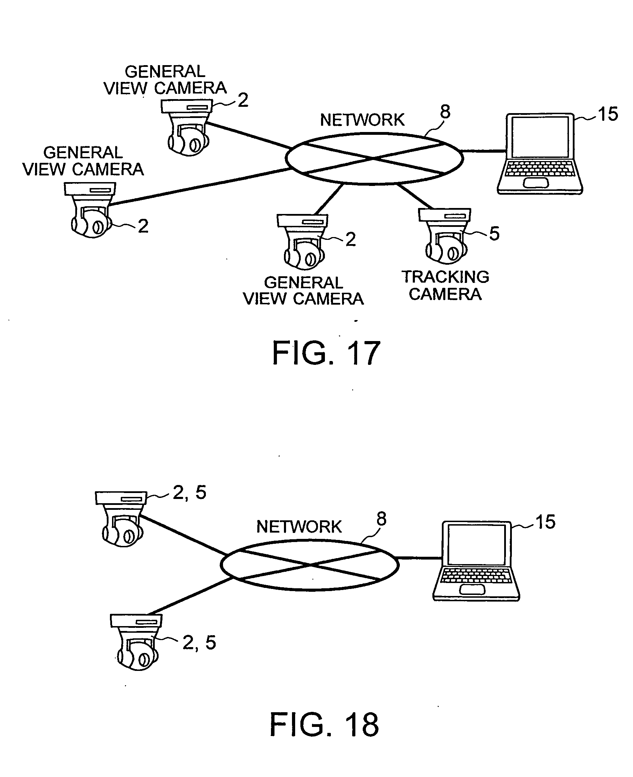

In the above-mentioned embodiment, the case that the one entire photographing camera 2 for photographing the subject to generate the image signal and the one tracking and photographing camera 5 are provided has been explained as an example. However, the present invention is not limited to such a case. For example, one or more entire photographing cameras 2 and one or more tracking and photographing cameras 5 may be provided. FIG. 17 shows a supervising system 100 having three entire photographing cameras 2, and one tracking and photographing camera 5. In this supervising system 100, the same subject may be photographed from the different photographing directions by a plurality of entire photographing cameras 2, or the different subjects may be photographed. When the motion detection is performed by the entire photographing camera 2, the camera is transferred to the tracking and photographing mode, and the photographing by the tracking and photographing camera 5 is executed. The number and the ratio of the entire photographing camera 2 and the tracking and photographing camera 5 may be, of course, arbitrarily determined.

In the supervising system 1 to which the present invention is applied, the cameras 2 and 5 may not specify the roles as the entire photographing and the tracking photographing, but the entire photographing or the tracking photographing may be executed in response to the circumstances. In the supervisory camera 101 shown in FIG. 18, two cameras 2 and 5 are respectively arranged. Under the normal photographing mode, two cameras 2 and 5 respectively photograph the whole image. When any of the cameras 2 and 5 detects a motion, operation shifts to the tracking and photographing mode, and any one of the cameras 2 and 5 executes the tracking photographing.

In the supervising system 1 to which the present invention is applied, the comparison of the luminance levels of the above-mentioned unit images may be executed at respective primary colors of R, G and B. The comparison of the luminance levels is executed among the unit images in the same coordinates (M, N) as described above, in other words, among the unit images in the same photographing direction. Thus, the change of the luminance levels in the respective primary color components of the comparison entire image to the reference entire image, in other words, the differential values of the luminance levels in the respective primary color components can be detected in the respective photographing directions.

Further, the present invention is executed not only as the above-mentioned supervising system 1, but also, for example, the functions of the supervising unit 15 may be all carried at the camera side. In addition, the present invention may also be applied to a program for executing the above-mentioned process in a computer or a recording medium for recording such a program.

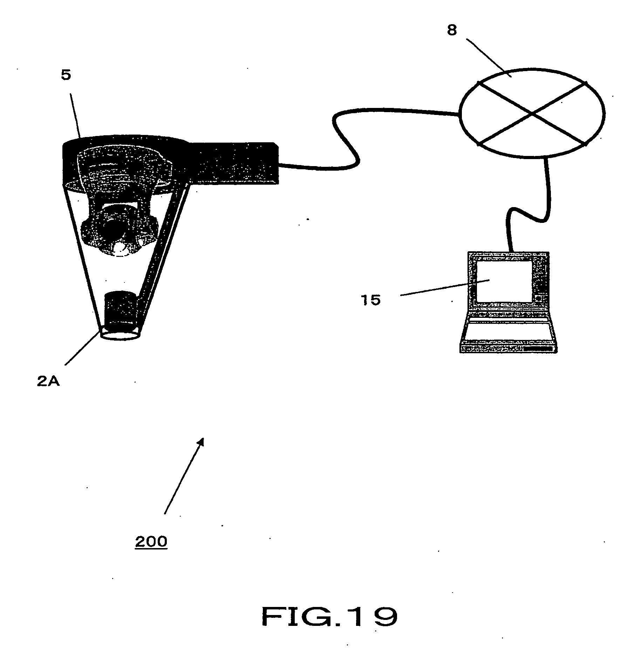

The present invention can also be applied to a supervising system 200 in which a fixed camera 2A for photographing an area of a wide range of 360 degrees as shown in FIG. 19 is used for the entire photographing camera 2 in the above-mentioned supervising system 1. This supervising system 200 includes the entire photographing camera 2A for generating an image signal by photographing a subject, a tracking and photographing camera 5, a network 8 connected to these cameras 2A, 5, and a supervising unit 15 for acquiring the image signal by controlling the entire photographing camera 2 and the tracking and photographing camera 5 via the connected network 8.

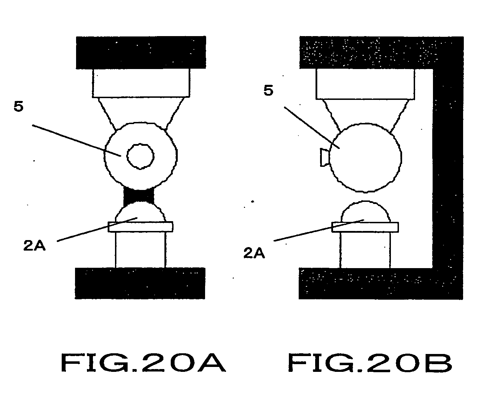

In this supervising system 200, the fixed camera 2A which can photograph in all directions of 360° in real time is used as the entire photographing camera 2, and this fixed camera 2A and tracking and photographing camera 5 which can perform pan/tilt/zoom are coaxially disposed as shown in FIGS. 20A and 20B.

FIG. 20A is a front view showing disposing examples of the fixed camera 2A and the tracking and photographing camera 5 in a front view and FIG. 20B is a side view thereof.

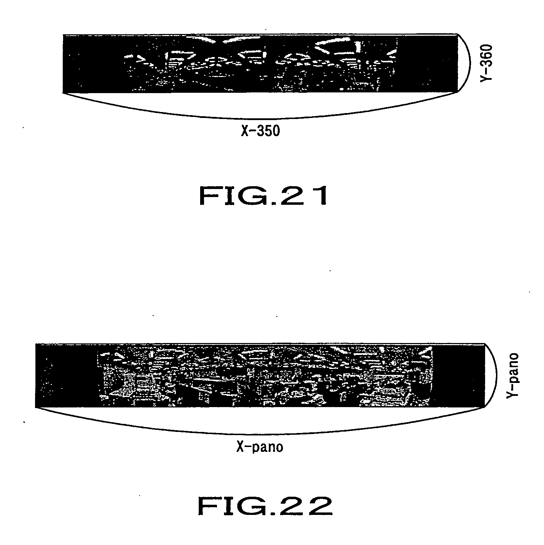

The image of all directions of 360° acquired in real time by the fixed camera 2A in this supervising system 200 is shown, for example, in FIG. 21, a pan direction angle of view of 360°, a tilt direction angle of view of 55° (an elevation angle: 38°, and a depression angle: 17°), and the number of pixels is about $1280 \times 240$ of image quality.

The panoramic image formed by laminating the images obtained by the tracking and photographing camera 5 has, for example, as shown in FIG. 22, a pan direction angle of view of 340°, a tilt direction angle of view of 51 ° (an elevation angle: 25.5°, and a depression angle: 25.5°), and the number of pixels is about $6400 \times 960$ of image quality.

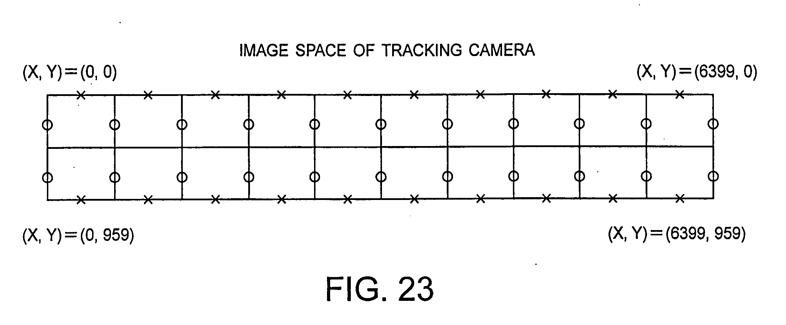

In this supervising system 200, its image space is, as shown in FIG. 23, obtained by laminating image (VGA $10 \times 2$ sheets).

One image obtained by the tracking and photographing camera 5 is zoom regulated in advance so that a tilt direction becomes 25.5° and pan direction becomes 34°.

The supervising unit 15 of this supervising system 200 is executed by next initializing (1) and initializing (2) at the shipment.

Initializing (1): A wide angle image space of a panoramic image in this supervising system 200 has a pan direction = 340°, a tilt direction = 51° of total angle of view. An image information is 6400 equally divided in a pan direction, and 960 equally divided in a tilt direction. This image information is stored in a panorama setting database of the supervising unit 15.

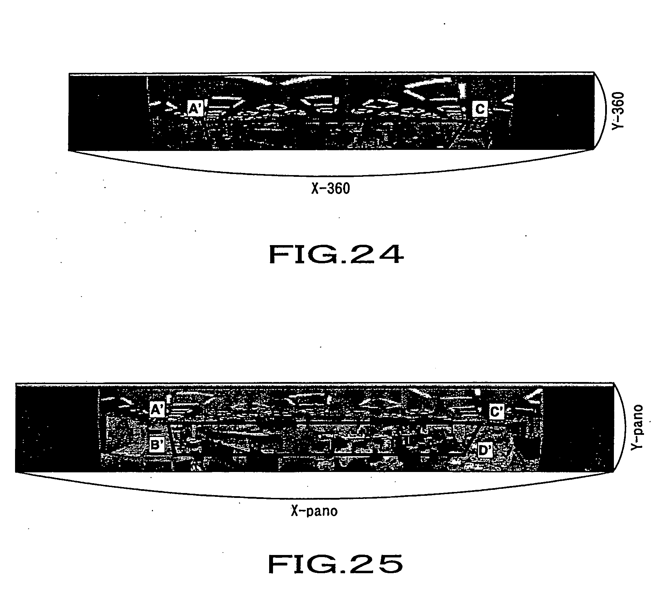

Initializing (2): Four points of A, B, C and D are set on the image of 360° entire direction shown in FIG. 24 acquired in real time by the fixed camera 2A, and four points of A', B', C' and D' are set on the panoramic image shown in FIG. 25 formed by laminating the image obtained by the tracking and photographing camera 5. The above-mentioned four points are regarded as being the same position. This is also stored in the panorama setting database of the supervising unit 15.

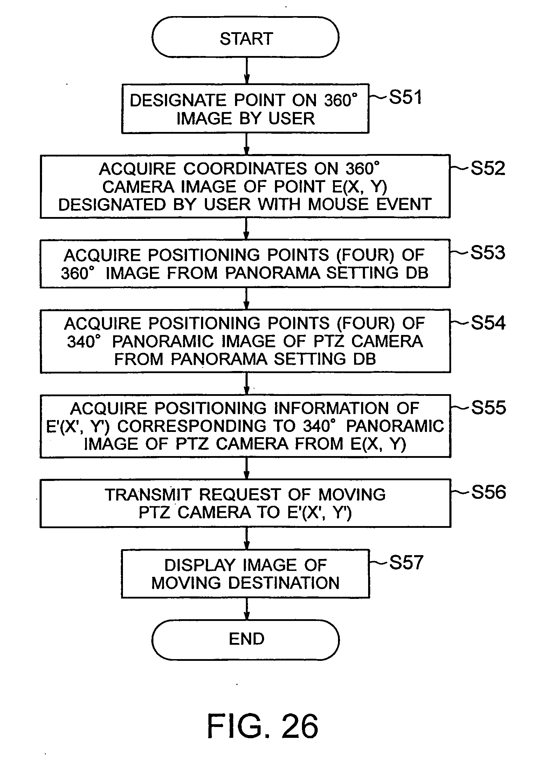

In this supervising system 200, the tracking and photographing camera 5 is controlled based on the designating information on the image of the 360° entire direction acquired in real time by the fixed camera 2A according to the sequence shown in the flowchart of FIG. 26 by the supervising unit 15 initialized in this manner.

That is, the supervising unit 15 of this supervising system 200 acquires the coordinates on the 360° of the point E (X, Y) designated by the user with mouse paint (step S52), when the user designates an arbitrary point on the image of the 360° entire direction (step S51), positioning points A, B, C and D of the 360° entire direction image is acquired from the panorama setting database (step S53), positioning points A', B', C' and D' of the 340° panoramic image of the tracking and photographing camera 5 is acquired from the panorama setting database (step S54), the position information of the 340° panoramic image corresponding to the position E(X, Y) on the 360° entire direction image is acquired (step S55), a request for moving to the position of E(X', Y') is transmitted to the tracking and photographing camera 5 (step S56), and the image of moving destination is displayed (step S57).

That is, in this supervising system 200, when an arbitrary point E is clicked on the image of the 360° entire direction shown in FIG. 24, the coordinates E(X, Y) on the image of FIG. 24 is led, and the relative position (approximation) is calculated from the respective points of A, B, C and D stored in advance in the panorama setting database for the coordinates E (X, Y).

A', B', C' and D' of FIG. 25 stored in advance in the panorama setting database is regarded as being corresponded to the points of A, B, C and D, the E' (X', Y') of FIG. 25 corresponding to E (X, Y) of FIG. 24 is can be obtained from the relative positions of the A', B', C' and D' and the calculated A, B, C and D. The calculated E', (X', Y') is expressed as position information on the image information stored in the database.

Pan tilt control is performed so that the center of the image of the tracking and photographing camera 5 becomes E' based on the position information of this E' (X', Y').

Here, the calculation of the relative position (approximation) of the E arbitrarily designated on the image of the 360° entire direction acquired in real time by the fixed camera 2A in this supervising system 200 will be performed as follows:

$$X1 : X2 \fallingdotseq Ex - (Ax+Bx)/2 : (Dx+Cx)/2 - Ex$$

$$Y1: Y2 \fallingdotseq Ey - (Ay+Cy)/2 : (By+Dy)/2 - Ey$$

The calculation of the position (approximation) of E' on the 340° panoramic image obtained by the tracking and photographing camera 5 is performed as follows:

The ratio X1:X2 of the relative position obtained in the previous calculation is 5:2, the ratio Y1:Y2 is 3:4, and the case where A'x >= B'x and D'x >= C'x,

$$E'x \doteqdot ((C'x+(D'x-C'x)*3/7)-(B'x+(A'x\ B'x)*4/7))*5/7+B'x+(A'x\ B'x)*4/7$$

The case where D'y>=B'y and A'y >= C'y,

$$E'y \doteqdot ((B'y+(D'y-B'y)*5/7)-(C'y+(A'y-C'y)*2/7))*3/7+C'y+(A'y-C'y)*2/7$$

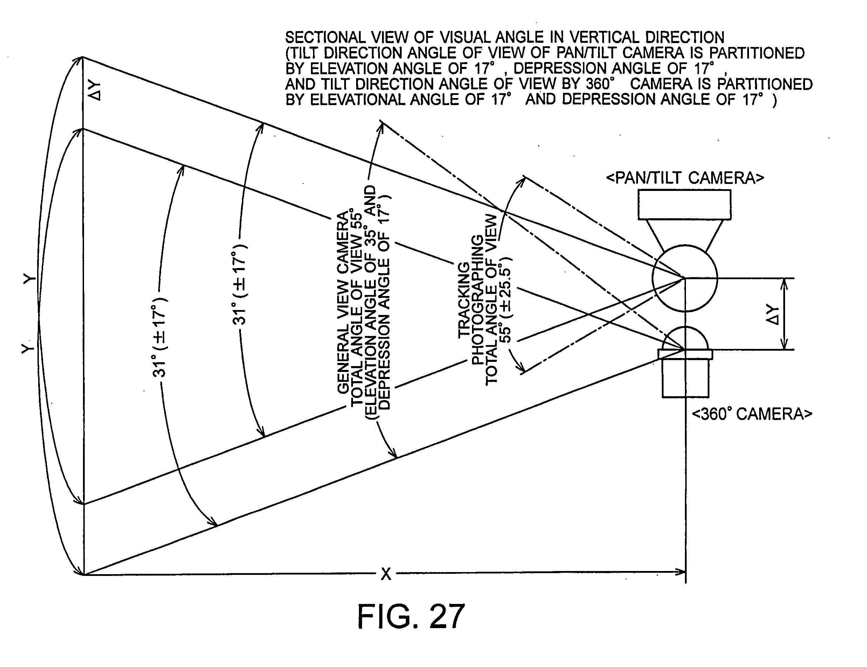

Here, the visual field angle sectional view of a vertical direction of the entire photographing camera 2A and the tracking and photographing camera 5 in this supervising system 200 is shown in FIG. 27.

FIG. 27 shows a graphical expression of capturing a subject in a substantially equal direction (vertical direction) by both the entire photographing camera 2A, that is, a wide angle camera (Panorama Camera) and the tracking and photographing camera 5 in this supervising system 200.

First,

X: a horizontal direction distance of a photographing subject and a camera
Y: a vertical direction distance (height) which can be photographed in the entire tilt angle of view at a distance X
$\Delta$Y: distance between centers of imaging parts of two cameras.

As a premise, the following two premises exist.

Premise 1: the tracking and photographing camera 5 and 360° camera exist on substantially the same vertical line at the centers of the imaging parts of the cameras.
Premise 2: the tilt direction angle of view of the tracking and photographing camera 5 and the entire photographing camera 2A is regulated to the same angle of view in a range of about 55° to 65°.

In addition, the positional relation of two visual angles as shown in FIG. 27.

If the two angles of view are 55°,

$$\Delta Y = 100 \text{ mm of camera positional relation,}$$

When an article of the position of X = 10 m is photographed,

$$Y = 2*X*Tan\ (55/2)° = 10.41 \text{ m}$$

is obtained. As a result,

$$\Delta Y/Y = 0.0096 = 0.96\%$$

is obtained,

Y: a difference of the position in the vertical direction between two cameras is very short with respect to the entire distance of the vertical direction. When two images are displayed by a monitor, it is not a level to feel the difference.

That is, the difference is mere about 5 dots when it is calculated in terms of VGA: 640 × 480.

Due to the coaxial layout, the angle of view of the horizontal direction is shared with the same angle of view in both cameras.

In this supervising system 200, the cameras 2A and 5 are coaxially disposed. Thus, the position calculating algorithm of the subject according to the relative positional relation of the cameras 2 and 5 is not required, but the point of the image of the 360° entire direction obtained by the photographing camera 2A is designated, and can be photographed by the tracking and photographing camera 5 of the image at the point as a center.

# EP 1 536 633 A1

**Claims**

1. A photographing apparatus comprising:

 a first camera for photographing a wide angle area;
 a second camera for photographing an area narrower than the wide angle area in a direction corresponding to the designated photographing direction;
 a motion detecting section for detecting the presence or absence of a motion in the image by comparing a first image generated by the first camera with the previous image photographed previously from the first image in terms of the difference of luminance levels;
 a memory for previously recording correlation information showing the correlation of the positions of the first image and a second image obtained by the second camera; and
 a controller for controlling the photographing direction of the second camera at the motion detected position by using the correlation information when the presence of the motion is detected by the motion detecting section.

2. The photographing apparatus according to claim 1, wherein the correlation information is an information obtained based on a plurality of predetermined positions of the first image and the second image.

3. The photographing apparatus according to claim 1, wherein the presence or absence of the motion is detected by the motion detecting section by comparing the difference of the luminance levels with a predetermined threshold value.

4. The photographing apparatus according to claim 1, wherein the first camera and the second camera are arranged at the substantially same positions.

5. The photographing apparatus according to claim 1, further comprising:

 recording means for recording the photographed first image on a recording medium.

6. The photographing apparatus according to claim 1, wherein the first camera is a wide angle fixed camera, and the first image is the image of the entire photographing range of the first camera.

7. The photographing apparatus according to claim 1, wherein the first camera is a camera for photographing by sequentially matching the photographing direction to the respective unit images constructing the first image, and the first image is the image formed by connecting the respective unit images.

8. A photographing apparatus comprising:

 a first camera for photographing a wide angle area;
 a second camera for photographing an area narrower than the wide angle area in a direction corresponding to the designated photographing direction;
 a motion detecting section for detecting the presence or absence of a motion at each unit image by comparing a first unit image constructing a first wide angle image generated by the first camera with the unit image in the same photographing direction photographed previously from the first unit image in terms of the difference of luminance levels;
 a recording section previously recording correlation information showing correlation of the respective image positions between the first unit image and the second unit image obtained by the second camera; and
 a controller for controlling the photographing direction of the second camera at the motion detected position by using the correlation information when the presence of the motion is detected by the motion detecting section.

9. The photographing apparatus according to claim 8, wherein the first camera is a camera for photographing by sequentially matching the photographing direction to a direction of each first unit image, and the first wide angle image is an image formed by connecting the first unit images.

10. A photographing method comprising:

a step of photographing a first image of a wide angle area by a first camera;

a step of photographing a second image of an area narrower than the wide angle area by a second camera; and

a motion detecting step of detecting the presence or absence of the motion in the image by comparing the first image with the previous image photographed previously from the first image in terms of a luminance level; controlling the photographing direction of the second camera at the motion detected position when the presence of the motion is detected by the motion detecting section by using the correlation information showing the correlation of the positions of the images of the first image and the second image obtained by the second camera.

**11.** A photographing method comprising:

a step of photographing a first wide angle image of a wide angle area by a first camera;

a step of photographing a second image of an area narrower than the wide angle area by a second camera; and

a motion detecting step of detecting the presence or absence of the motion in the image at each unit image by comparing a first unit image constructing the first wide angle image with a unit image in the same photographing direction previously photographed from the unit image in terms of the difference of a luminance level; controlling the photographing direction of the second camera at the motion detected position when the presence of the motion is detected by the motion detecting section by using the correlation information showing the correlation of the positions of the images of the first unit image and a second unit image obtained by the second camera.

**12.** A supervising system comprising:

a first camera for photographing a wide angle area;

a second camera for photographing an area narrower than the wide angle area in a direction corresponding to the designated photographing direction;

a motion detecting section for detecting the presence or absence of a motion at each unit image by comparing a first unit image constructing a first wide angle image generated by the first camera with the unit image in the same photographing direction photographed previously from the first unit image in terms of the difference of a luminance level;

a recording section previously recording correlation information showing correlation of the respective image positions between the first unit image and a second unit image obtained by the second camera; and

a controller for controlling the photographing direction of the second camera at the motion detected position by using the correlation information when the presence of the motion is detected by the motion detecting section.

**13.** A program for causing a computer to execute:

a step of photographing a first image of a wide angle area by a first camera;

a step of photographing a second image of an area narrower than the wide angle area by a second camera; and

a motion detecting step of detecting the presence or absence of the motion in the image by comparing the first image with the previous image photographed previously from the first image in terms of luminance levels; controlling the photographing direction of the second camera at the motion detected position when the presence of the motion is detected by the motion detecting section by using the correlation information showing the correlation of the positions of the images of the first image and the second image obtained by the second camera.

FIG. 1

FIG. 2

GENERAL VIEW
CAMERA

PHOTO-
GRAPHING

NETWORK

TRACKING
CAMERA

WHOLE IMAGE
SYNTHESIS

FIG. 3

FIG. 4

FIG. 5

SHIFT PHOTOGRAPHING DIRECTION

UNIT IMAGE

WHOLE IMAGE

PHOTOGRAPHING RANGE

FIG. 6

# FIG. 7

ENLARGED IMAGE

WHOLE IMAGE

171

170

172 WIDE

173 ZOOM

176 mode-1 mode-2
mode-3 mode-4

175

45

UNIT IMAGE

PREVIOUS WHOLE IMAGE

JUDGE THE PRESENCE
OR ABSENCE OF MOTION

$a_1$

$b_1$

TRACKING IMAGE
POSITION

t
NORMAL
PHOTOGRAPHING
MODE

t
TRACKING
PHOTOGRAPHING
MODE

FIG. 8

EP 1 536 633 A1

FIG. 9

START

S11 — TURN PHOTOGRAPHING DIRECTION OF TWO CAMERAS 2, 5 AT 340°

S12 — SPECIFY AREA DESIRED TO BE MONITORED

S13 — REGULATE SETTING POINT

S14 — STORE IN PANORAMA SETTING DB 35

END

FIG. 10

FIG. 11A

FIG. 11B

```
            ┌─────────────┐
            │    START    │
            └──────┬──────┘
                   │
                   ▼
        ┌──────────────────────┐
        │  ACQUIRE SETTING FROM│───S21
        │ PANORAMA SETTING DB 35│
        └──────────┬───────────┘
                   │
                   ▼
        ┌──────────────────────┐
        │ TRANSMIT DRIVE SIGNAL │───S22
        │ TO PAN TILTER SECTION 3│
        └──────────┬───────────┘
                   │◄──────────────┐
                   ▼               │
                  ╱ IS  ╲          │
                 ╱PHOTOGRAPHING╲   │
                ╱ OF UNIT IMAGE  ╲─NO
                ╲   ENDED?       ╱
                 ╲             ╱  S23
                  ╲         ╱
                   │ YES
                   ▼
        ┌──────────────────────┐
        │   FORM WHOLE IMAGE   │───S24
        └──────────┬───────────┘
                   │
                   ▼
        ┌──────────────────────┐
        │  CALL DIFFERENCE     │───S25
        │ SENSING SECTION 32   │
        └──────────┬───────────┘
                   │
                   ▼
            ┌─────────────┐
            │     END     │
            └─────────────┘
```

# FIG. 12

28

```
                    ┌─────────────────┐
                    │      START      │
                    └─────────────────┘
                             │
                             ▼
              ┌──────────────────────────┐
              │    ACQUIRE TRACKING      │ ──S31
              │ PHOTOGRAPHING CONDITION  │
              └──────────────────────────┘
                             │
                             ▼
              ┌──────────────────────────┐
              │   DETECT MOTION BASED    │
              │      ON TRACKING         │ ──S32
              │ PHOTOGRAPHING CONDITION  │
              └──────────────────────────┘
                             │
                          S33│
                          ◇◇◇◇◇◇◇
                     ◇◇◇             ◇◇◇
                  ◇◇     IS MOTION       ◇◇   NO
                  ◇◇     DETECTED?       ◇◇ ──────────┐
                     ◇◇◇             ◇◇◇              │
                          ◇◇◇◇◇◇◇                     │
                             │ YES                     │
                             ▼                         │
              ┌──────────────────────────┐            │
              │    ACCESS TO TRACKING    │ ──S34       │
              │  POSITION CALCULATING    │            │
              │        SECTION 34        │            │
              └──────────────────────────┘            │
                             │                         │
                             ▼                         │
              ┌──────────────────────────┐            │
              │    ACQUIRE TRACKING      │ ──S35       │
              │     IMAGE POSITION       │            │
              └──────────────────────────┘            │
                             │                         │
                             ▼                         │
              ┌──────────────────────────┐            │
              │    NOTIFY TO TRACKING    │ ──S36       │
              │     PHOTOGRAPHING        │            │
              │  CONTROL SECTION 33      │            │
              └──────────────────────────┘            │
                             │                         │
                             └──────────┬──────────────┘
                                        │
                                        ▼
                              ┌─────────────────┐
                              │      END        │
                              └─────────────────┘
```

# FIG. 13

FIG. 14A

FIG. 14B

START

ACQUIRE TRACKING
IMAGE POSITION FROM
DIFFERENCE SENSING
SECTION — S41

TRANSMIT DRIVE SIGNAL
TO TRACKING CAMERA — S42

IS REQUEST
STOPPED? — NO
S43

YES

END

FIG. 15

GENERAL VIEW CAMERA

2

TRACKING CAMERA

5

SENSING DIFFERENCE     SENSING DIFFERENCE     SENSING DIFFERENCE

FIG. 16A

PHOTO-GRAPHING     PHOTO-GRAPHING     PHOTO-GRAPHING

FIG. 16B

15

EP 1 536 633 A1

GENERAL
VIEW CAMERA 2

GENERAL
VIEW CAMERA

2

NETWORK 8

15

2

GENERAL
VIEW CAMERA

5

TRACKING
CAMERA

## FIG. 17

2, 5

NETWORK 8

15

2, 5

## FIG. 18

5

8

2A

15

200

FIG.19

5

2A

FIG.20A

5

2A

FIG.20B

FIG.21

FIG.22

IMAGE SPACE OF TRACKING CAMERA

$(X, Y) = (0, 0)$                               $(X, Y) = (6399, 0)$

$(X, Y) = (0, 959)$                          $(X, Y) = (6399, 959)$

# FIG. 23

EP 1 536 633 A1

X-360

Y-360

# FIG.24

X-pano

Y-pano

# FIG.25

START

DESIGNATE POINT ON 360°
IMAGE BY USER — S51

ACQUIRE COORDINATES ON 360°
CAMERA IMAGE OF POINT E(X, Y)
DESIGNATED BY USER WITH MOUSE EVENT — S52

ACQUIRE POSITIONING POINTS (FOUR) OF
360° IMAGE FROM PANORAMA SETTING DB — S53

ACQUIRE POSITIONING POINTS (FOUR) OF
340° PANORAMIC IMAGE OF PTZ CAMERA
FROM PANORAMA SETTING DB — S54

ACQUIRE POSITIONING INFORMATION OF
E'(X', Y') CORRESPONDING TO 340° PANORAMIC
IMAGE OF PTZ CAMERA FROM E(X, Y) — S55

TRANSMIT REQUEST OF MOVING
PTZ CAMERA TO E'(X', Y') — S56

DISPLAY IMAGE OF
MOVING DESTINATION — S57

END

FIG. 26

SECTIONAL VIEW OF VISUAL ANGLE IN VERTICAL DIRECTION
(TILT DIRECTION ANGLE OF VIEW OF PAN/TILT CAMERA IS PARTITIONED
BY ELEVATION ANGLE OF 17° DEPRESSION ANGLE OF 17°
AND TILT DIRECTION ANGLE OF VIEW BY 360° CAMERA IS PARTITIONED
BY ELEVATIONAL ANGLE OF 17° AND DEPRESSION ANGLE OF 17°)

<PAN/TILT CAMERA>

<360° CAMERA>

ΔY

TRACKING
PHOTOGRAPHING
TOTAL ANGLE OF VIEW
55° (±25.5°)

GENERAL VIEW CAMERA
TOTAL ANGLE OF VIEW 55°
(ELEVATION ANGLE OF 35°, AND
DEPRESSION ANGLE OF 17°)

31° (±17°)

31° (±17°)

ΔY

Y

Y

X

FIG. 27

**European Patent Office**

## EUROPEAN SEARCH REPORT

Application Number

EP 04 02 8026

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y | US 2002/075258 A1 (PARK MICHAEL C ET AL) 20 June 2002 (2002-06-20)<br><br><br>* paragraph [0018] *<br>* paragraph [0026] - paragraph [0033] *<br>* paragraph [0037] - paragraph [0039] *<br>* paragraph [0045] - paragraph [0050] *<br>* paragraph [0058] - paragraph [0064] *<br>* paragraph [0118] *<br>* paragraph [0125] - paragraph [0126] *<br>* paragraph [0137] - paragraph [0138] *<br>* figures 1,3a,3b,4a * | 1,2,4-6,<br>10,13<br>3,7-9,<br>11,12 | H04N5/232<br>H04N5/262 |
| Y | EP 1 363 255 A (SONY CORPORATION) 19 November 2003 (2003-11-19)<br>* column 4, paragraph 22 *<br>* column 7, paragraph 34 *<br>* column 7, paragraph 39 - column 8, paragraph 40 * | 3,7-9,<br>11,12 | |
| X | EP 0 714 081 A (SENSORMATIC ELECTRONICS CORPORATION) 29 May 1996 (1996-05-29)<br>* column 2, line 19 - column 4, line 52 *<br>* figures 1-3 * | 1-3,5,6,<br>10,13 | TECHNICAL FIELDS SEARCHED (Int.Cl.7)<br><br>H04N |
| D,A | EP 1 030 519 A (SONY CORPORATION) 23 August 2000 (2000-08-23)<br>* the whole document * | 1 | |
| D,A | PATENT ABSTRACTS OF JAPAN vol. 1998, no. 09, 31 July 1998 (1998-07-31)<br>& JP 10 108163 A (SONY CORP), 24 April 1998 (1998-04-24)<br>* abstract * | 1 | |

The present search report has been drawn up for all claims

| Place of search | Date of completion of the search | Examiner |
|---|---|---|
| The Hague | 8 March 2005 | Didierlaurent, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 8026

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2005

| Patent document<br>cited in search report | | Publication<br>date | Patent family<br>member(s) | | Publication<br>date |
|---|---|---|---|---|---|
| US 2002075258 | A1 | 20-06-2002 | US | 6337683 B1 | 08-01-2002 |
| | | | US | 6323858 B1 | 27-11-2001 |
| | | | WO | 03036567 A1 | 01-05-2003 |
| | | | US | 2002180759 A1 | 05-12-2002 |
| | | | US | 2002196330 A1 | 26-12-2002 |
| | | | US | 2004075738 A1 | 22-04-2004 |
| | | | AT | 285092 T | 15-01-2005 |
| | | | AU | 5213299 A | 05-12-2000 |
| | | | CA | 2372110 A1 | 23-11-2000 |
| | | | DE | 69922705 D1 | 20-01-2005 |
| | | | EP | 1204933 A1 | 15-05-2002 |
| | | | JP | 2002544742 T | 24-12-2002 |
| | | | US | 2002063709 A1 | 30-05-2002 |
| | | | WO | 0070486 A1 | 23-11-2000 |
| | | | US | 2004257384 A1 | 23-12-2004 |
| | | | US | 2002063711 A1 | 30-05-2002 |
| | | | US | 2002046218 A1 | 18-04-2002 |
| | | | AU | 3054702 A | 06-05-2002 |
| | | | CA | 2427053 A1 | 02-05-2002 |
| | | | EP | 1336293 A1 | 20-08-2003 |
| | | | JP | 2004512778 T | 22-04-2004 |
| | | | WO | 0235831 A1 | 02-05-2002 |
| | | | US | 6731305 B1 | 04-05-2004 |
| EP 1363255 | A | 19-11-2003 | JP | 2003333390 A | 21-11-2003 |
| | | | EP | 1363255 A2 | 19-11-2003 |
| | | | US | 2004017470 A1 | 29-01-2004 |
| EP 0714081 | A | 29-05-1996 | AU | 701222 B2 | 21-01-1999 |
| | | | AU | 3798595 A | 30-05-1996 |
| | | | BR | 9505248 A | 16-09-1997 |
| | | | CA | 2155719 A1 | 23-05-1996 |
| | | | DE | 69521479 D1 | 02-08-2001 |
| | | | DE | 69521479 T2 | 11-10-2001 |
| | | | EP | 0714081 A1 | 29-05-1996 |
| | | | JP | 8265741 A | 11-10-1996 |
| | | | US | 6724421 B1 | 20-04-2004 |
| EP 1030519 | A | 23-08-2000 | JP | 2000243062 A | 08-09-2000 |
| | | | CA | 2298807 A1 | 17-08-2000 |
| | | | CN | 1266332 A | 13-09-2000 |
| | | | EP | 1030519 A2 | 23-08-2000 |
| | | | TW | 509895 B | 11-11-2002 |
| JP 10108163 | A | 24-04-1998 | NONE | | |

EPO FORM P0459

For more details about this annex : see Official Journal of the European Patent Office, No. 12/82